# FASCICULE DE BREVET EUROPEEN

(11) **EP 4 590 950 B1**
(45) Date de publication et mention de la délivrance du brevet: **12.08.2026**
(21) Numéro de dépôt: 23777330.4
(22) Date de dépôt: 08.09.2023
(51) Int. Cl.: F02K 1/72

(54) **INVERSEUR DE POUSSEE COMPRENANT DES MOYENS FACILITANT LE MONTAGE D'UNE MEMBRANE D'OBTURATION DE LA VEINE SECONDAIRE**
SCHUBUMKEHRVORRICHTUNG MIT MITTELN ZUR MONTAGE EINER MEMBRAN ZUR ABDICHTUNG DES SEKUNDÄREN STRÖMUNGSWEGES
THRUST REVERSER COMPRISING MEANS FACILITATING THE MOUNTING OF A MEMBRANE FOR SEALING OFF THE SECONDARY FLOW PATH

(30) Priorité: 20.09.2022 FR 2209510
(43) Date de publication de la demande: 30.07.2025
(73) Titulaire: Safran Nacelles, 76700 Gonfreville-l'Orcher (FR)
(72) Inventeur: CHANDELIER, Julien, 77550 MOISSY-CRAMAYEL (FR); GONIDEC, Patrick, 77550 MOISSY-CRAMAYEL (FR); BELLET, François, 77550 MOISSY-CRAMAYEL (FR); BOILEAU, Patrick André, 77550 MOISSY-CRAMAYEL (FR)
(74) Mandataire: Santarelli
(86) Numéro de dépôt international: PCT/FR2023/051348
(87) Numéro de publication internationale: WO 2024/062174

(56) Documents cités:
- WO-A1-2022/167754
- FR-A1- 3 076 864
- FR-A1- 3 087 848

## Description

### Domaine technique

L'invention se rapporte au domaine des nacelles et des inverseurs de poussée pour ensemble propulsif d'aéronef, et, plus particulièrement, aux inverseurs comprenant une ou plusieurs membranes d'obturation de la veine secondaire.

### État de la technique antérieure

Les inverseurs de poussée sont des dispositifs permettant de dévier vers l'avant le flux d'air traversant l'ensemble propulsif, de manière à raccourcir les distances d'atterrissage, et à limiter la sollicitation des freins sur les atterrisseurs.

Les inverseurs à grilles actuellement exploités dans le secteur aéronautique comprennent généralement des grilles de déviation intégrées à une structure fixe de l'inverseur, destinée à être reliée à un carter de turbomachine. Une structure mobile de l'inverseur comporte un ou plusieurs capots mobiles d'inverseur, et elle est montée déplaçable en translation par rapport à la structure fixe entre une position avancée de poussée directe, et une position reculée d'inversion de poussée. En position avancée de poussée directe, les grilles de déviation sont agencées dans une cavité des capots mobiles d'inverseur, et elles sont isolées de la veine secondaire de l'ensemble propulsif par une paroi radialement interne des capots d'inverseur. En revanche, dans la position reculée d'inversion de poussée, la paroi radialement interne reculée des capots d'inverseur définit une ouverture de passage de la veine secondaire vers les grilles de déviation.

Pour dévier au moins une partie du flux secondaire vers cette ouverture de passage en direction des grilles, l'inverseur est également équipé de volets d'obturation, qui, lorsqu'ils sont déployés, obturent au moins partiellement la veine secondaire. De manière connue, cela force l'air du flux secondaire à traverser l'ouverture de passage et à rejoindre les grilles, qui génèrent alors le flux d'air de contre-poussée vers l'avant.

Il existe également des solutions d'obturation de la veine secondaire à l'aide de membranes déployables. Une telle conception à membranes est par exemple connue du document FR 3 076 864 A1.

Cependant, il subsiste un besoin d'amélioration de l'attache de cette membrane d'obturation sur ou à proximité de l'arrière des grilles de déviation, de manière à conférer une fixation fiable, tout en facilitant les opérations d'installation de cette membrane sur l'inverseur.

### Exposé de l'invention

Pour répondre à ce besoin, l'invention a tout d'abord pour objet un inverseur de poussée pour ensemble propulsif d'aéronef, l'inverseur comprenant une structure fixe équipée d'une paroi de délimitation radialement interne d'une veine secondaire de l'ensemble propulsif destinée à être traversée par un flux secondaire, l'inverseur comprenant également une structure mobile comprenant au moins un capot d'inverseur équipé d'une paroi radialement externe et d'une paroi radialement interne formant une délimitation radialement externe de la veine secondaire, la structure mobile étant déplaçable en translation par rapport à la structure fixe selon un axe central longitudinal de l'inverseur, entre une position avancée de poussée directe et une position reculée d'inversion de poussée, l'inverseur comportant également une grille de déviation ainsi qu'une membrane d'obturation conçue pour dévier au moins une partie du flux secondaire vers la grille de déviation lorsque la structure mobile se trouve en position reculée d'inversion de poussée, l'inverseur comportant également un cadre arrière de support de grille de déviation.

Selon l'invention, l'inverseur comporte un dispositif d'interface entre la membrane d'obturation et une structure arrière de grilles comprenant le cadre arrière de support de grille, l'aubage situé le plus en arrière sur la grille de déviation, ainsi qu'un organe d'appui de la grille sur le cadre arrière de support de grille, l'organe d'appui étant en saillie vers l'arrière par rapport à l'aubage le plus arrière et étant également fixé au cadre arrière de support de grille. De plus, une première extrémité de la membrane d'obturation est fixée sur le dispositif d'interface par l'intermédiaire de premiers moyens d'accrochage, et enfin, le dispositif d'interface forme un clip élastique monté autour de la structure arrière, et dont une portion arrière de clip est agencée en arrière par rapport à la structure arrière.

Grâce à la mise en œuvre d'un système de clip élastique formé au sein du dispositif d'interface spécifique à l'invention, l'installation de la membrane sur l'inverseur est avantageusement simplifiée, tout en conférant une fixation fiable et performante. En particulier, la membrane est préférentiellement fixée sur le dispositif d'interface en dehors de l'inverseur, avant de clipser l'ensemble sur ladite structure arrière de l'inverseur.

L'invention prévoit de préférence au moins l'une des caractéristiques techniques optionnelles suivantes, prises isolément ou en combinaison.

De préférence, le dispositif d'interface est équipé de moyens d'anti-rotation relativement à la structure arrière, les moyens d'anti-rotation étant au contact du cadre arrière de support de grille et/ou de l'organe d'appui de la grille de déviation.

De préférence, le clip comporte un crochet en appui contre l'un quelconque des éléments suivants :
- le cadre arrière de support de grille ;
- l'aubage le plus arrière de la grille ; ou
- un verrou de clip lui-même en appui contre l'aubage le plus arrière de la grille.

Selon un mode de réalisation préféré de l'invention, le crochet du clip élastique est un crochet de serrage en appui contre une extrémité avant du cadre arrière de support de grille, et le clip élastique comprend une butée axiale arrière en appui contre une partie arrière de la structure arrière, de préférence contre une extrémité arrière du cadre arrière de support de grille, le crochet de serrage forçant vers l'avant la butée axiale arrière contre la partie arrière de la structure arrière.

De préférence, le clip élastique comporte, entre le crochet de serrage et la butée axiale arrière, des moyens flexibles permettant, lorsqu'ils sont amenés dans un état de contrainte prédéterminée, de désengager le crochet du cadre arrière de support de grille, les moyens flexibles comprenant préférentiellement une languette axiale.

Préférentiellement, le clip élastique comporte également, de préférence à l'extrémité du crochet de serrage, des moyens de préhension permettant, sous contrainte, d'amener les moyens flexibles dans ledit état de contrainte prédéterminée.

De préférence, les moyens flexibles et le crochet de serrage sont réalisés d'un seul tenant avec le reste du dispositif d'interface, ou bien rapportés au sein de ce dernier.

De préférence, au moins une partie des premiers moyens d'accrochage de la membrane se situe en avant par rapport à une extrémité arrière de la structure arrière. Cela permet un gain en performances de l'inverseur, le flux d'air extrait de la veine secondaire étant mieux canalisé vers la / les grilles de déviation.

De préférence, le dispositif d'interface s'étend sur une étendue angulaire supérieure à 10°, en étant centré sur l'axe central longitudinal de l'inverseur.

De préférence, la grille de déviation appartient à la structure fixe de l'inverseur. Cependant, une configuration à grille mobile reste possible, sans sortir du cadre de l'invention.

L'invention a également pour objet un ensemble propulsif pour aéronef, comprenant une turbomachine et une nacelle comportant au moins un capot de soufflante, ainsi qu'un inverseur de poussée tel que décrit ci-dessus.

L'invention a également pour objet un procédé d'installation d'une membrane d'obturation d'un inverseur de poussée tel que décrit ci-dessus, comprenant les deux étapes suivantes, réalisées dans un ordre indifférent :
- fixation de la première extrémité de la membrane d'obturation sur le dispositif d'interface, par l'intermédiaire des premiers moyens d'accrochage, cette étape de fixation étant préférentiellement réalisée en dehors de l'inverseur ;
- déplacement de la structure mobile de l'inverseur dans sa position reculée d'inversion de poussée ;
- depuis l'extérieur de l'inverseur, clipsage du dispositif d'interface sur la structure arrière, et poussée de la membrane d'obturation dans la veine secondaire.

D'autres avantages et caractéristiques de l'invention apparaîtront dans la description détaillée non limitative ci-dessous.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur de poussée selon un mode de réalisation préféré de l'invention, représenté en configuration de poussée directe ;
[Fig. 2] est une demi-vue schématique en coupe longitudinale de l'inverseur équipant l'ensemble propulsif montré sur la figure 1, avec l'inverseur représenté en configuration de poussée directe ;
[Fig. 3] est une demi-vue schématique de l'inverseur montré sur la figure 2, représenté en configuration d'inversion de poussée ;
[Fig. 3A] est une demi-vue schématique similaire à celle de la figure précédente, avec l'inverseur se présentant selon une forme alternative de réalisation ;
[Fig. 4] est une vue en perspective de l'inverseur montré sur les figures 2 et 3, représenté en configuration de poussée directe ;
[Fig. 5] est une vue en perspective de l'inverseur montré sur la figure 4, représenté en configuration d'inversion de poussée ;
[Fig. 6] est une vue plus détaillée en perspective d'une partie de l'inverseur, selon un mode de réalisation préféré de l'invention ;
[Fig. 7] est une vue en perspective similaire à celle de la figure 6, selon un autre angle de vue ;
[Fig. 7A] est une vue en coupe de la partie d'inverseur montrée sur les figures 6 et 7, avec le clip ouvert ;
[Fig. 7B] est une vue en coupe d'une partie d'inverseur similaire à celle montrée sur les figures 6 à 7A, avec les premiers moyens d'accrochage de la membrane d'obturation se présentant selon une alternative ;
[Fig. 8] est une vue en perspective du dispositif d'interface montré sur la partie d'inverseur des figures 6 à 7A ;
[Fig. 9] est une vue en perspective similaire à celle de la figure 8, selon un autre angle de vue ;
[Fig. 10] est une vue en perspective similaire à celle de la figure 6, avec la partie d'inverseur se présentant selon une alternative ;
[Fig. 11] est une vue en coupe de la partie d'inverseur montrée la figure précédente ;
[Fig. 12] est une vue schématique en coupe montrant une partie d'inverseur selon un autre mode de réalisation préféré de l'invention ;
[Fig. 13] est une vue schématique en coupe montrant une partie d'inverseur selon encore un autre mode de réalisation préféré de l'invention ; et
[Fig. 14] est une vue schématique en coupe montrant une partie d'inverseur selon encore un autre mode de réalisation préféré de l'invention.

### Description des modes de réalisation

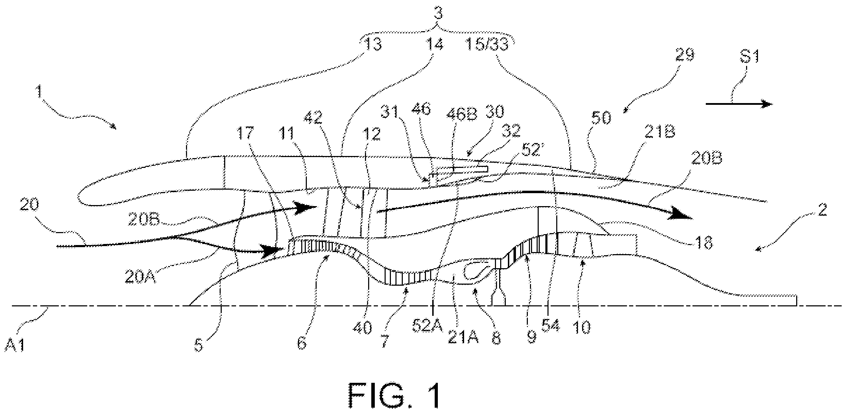

Il est représenté sur la figure 1 un ensemble propulsif 1 d'aéronef, présentant un axe central longitudinal A1.

Par la suite, les termes « amont » et « aval » sont définis relativement à un sens général S1 d'écoulement des gaz à travers l'ensemble propulsif 1, le long de l'axe A1 lorsque celui-ci génère une poussée. Ces termes « amont » et « aval » pourraient respectivement être substitués par les termes « avant » et « arrière », avec la même signification.

L'ensemble propulsif 1 comprend une turbomachine 2, une nacelle 3 ainsi qu'un mât (non représenté), destiné à relier l'ensemble propulsif 1 à une aile (non représentée) de l'aéronef.

La turbomachine 2 est dans cet exemple un turboréacteur à double flux et à double corps comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz. Le turboréacteur 2 est doté d'un carter de soufflante 11 relié au générateur de gaz par des bras structuraux 12.

La nacelle 3 comprend une section avant formant une entrée d'air 13, une section médiane qui comporte deux capots de soufflante 14 enveloppant le carter de soufflante 11, et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz. La veine secondaire 21B est délimitée radialement vers l'intérieur par un carénage interne fixe qui enveloppe le générateur de gaz. Dans cet exemple, le carénage interne fixe comprend un premier tronçon 17 appartenant à la section médiane 14, et un deuxième tronçon 18 s'étendant vers l'arrière à partir du premier tronçon 17, de manière à former une partie de la section arrière 15. Ce second tronçon 18 fait partie intégrante d'une structure fixe d'un inverseur de poussée qui sera décrit ci-après. Ce même tronçon sera par la suite dénommé paroi 18 de délimitation radialement interne de la veine secondaire 21B.

Radialement vers l'extérieur, la veine secondaire 21B est délimitée par le carter de soufflante 11, et, dans la configuration de la figure 1, par un ou plusieurs capots mobiles d'inverseur 33 formant une partie de la section arrière 15 de la nacelle 3, et qui seront décrits ultérieurement. Plus précisément, entre le carter de soufflante 11 et les capots d'inverseur 33, il est prévu une virole extérieure 40 d'un carter intermédiaire 42, ce dernier comprenant les bras structuraux 12 précités, dont l'extrémité radialement externe est fixée sur cette virole 40. Celle-ci participe donc également à délimiter la veine secondaire 21B radialement vers l'extérieur, en étant située dans le prolongement axial aval du carter de soufflante 11.

La nacelle 3 comporte donc un inverseur de poussée 30 centré sur l'axe A1 et comprenant d'une part une structure fixe 31 solidaire du carter de soufflante 11, et d'autre part une structure 29 mobile par rapport à la structure fixe 31. La structure fixe 31 comporte par exemple un cadre avant 46 qui la raccorde fixement au carter de soufflante 11, de préférence via un assemblage en bride couteau situé en aval de la virole extérieure 11. Ce cadre avant 46 contient une partie aérodynamique profilée appelée bord de déviation 46B, qui guide l'écoulement en jet inversé.

Ici, la structure fixe 31 comporte aussi une pluralité de grilles de déviation 32 agencées de manière adjacente les unes aux autres autour de l'axe A1, selon une direction circonférentielle de l'inverseur 30 et de l'ensemble propulsif 1. Par ailleurs, la structure mobile 29 comprend quant à elle les capots mobiles d'inverseur 33 précités, par exemple deux capots 33 s'étendant chacun sur une amplitude angulaire d'environ 180°. Cette configuration à deux capots 33 est particulièrement bien adaptée dans le cas d'une conception de nacelle dans laquelle les capots/parois 18 sont également montés articulés, l'inverseur 30 présentant alors une architecture dite « en D », connue sous l'appellation anglo-saxonne « D-Duct ». Dans cette architecture, les capots 18, 33 sont reliés de manière à s'ouvrir / se fermer simultanément lors des opérations de maintenance sur le moteur. Néanmoins, d'autres architectures sont possibles, comme par exemple une architecture dite « en C », connue sous l'appellation anglo-saxonne « C-Duct », ou encore une architecture dite « en O », connue sous l'appellation anglo-saxonne « O-Duct ».

Chaque capot d'inverseur 33 comporte une paroi radialement externe 50 formant une surface aérodynamique externe de nacelle, ainsi qu'une paroi radialement interne 52 participant à la délimitation de la veine secondaire 21B radialement vers l'extérieur. Cette paroi 52 se situe dans la continuité aval du bord de déviation 46B. Les deux parois 50, 52 définissent une cavité 54 ouverte axialement à l'extrémité amont du capot d'inverseur 33.

La figure 1 montre l'inverseur 30 dans une configuration de poussée vers l'avant, dit « jet direct », correspondant à une configuration standard de vol. Dans cette configuration, les capots 33 de la structure mobile 29 sont dans une position de fermeture, dite position avancée de poussée ou de « jet direct », dans laquelle ces capots d'inverseur 33 sont en appui sur la structure fixe 31, en particulier sur le bord de déviation 46B faisant partie intégrante de cette dernière. En effet, dans la configuration de poussée directe, l'extrémité amont 52a de la paroi radialement interne 52 de chaque capot 33 est en appui axial contre le bord de déviation 46B.

Le maintien du capot mobile 33 dans la position avancée de poussée directe est assuré par des moyens de verrouillage de ce capot sur la structure fixe 31 de l'inverseur. Ces moyens commandés de verrouillage (non représentés) sont conventionnels, donc ils ne seront pas davantage décrits.

La structure mobile 29 est ainsi déplaçable en translation par rapport à la structure fixe 31 selon l'axe A1 de l'inverseur, entre la position avancée de poussée directe montrée sur la figure 1, et une position reculée d'inversion de poussée qui sera décrite ultérieurement. Dans la position avancée de poussée directe de la structure mobile 29, les grilles de déviation 32 sont agencées dans la cavité 54 des capots d'inverseur 33, en étant isolées de la veine secondaire 21B par la paroi radialement interne 52 de ces capots coulissant 29 d'inverseur. Cette paroi 52, formant la paroi externe de la veine secondaire, est également appelée panneau interne acoustique.

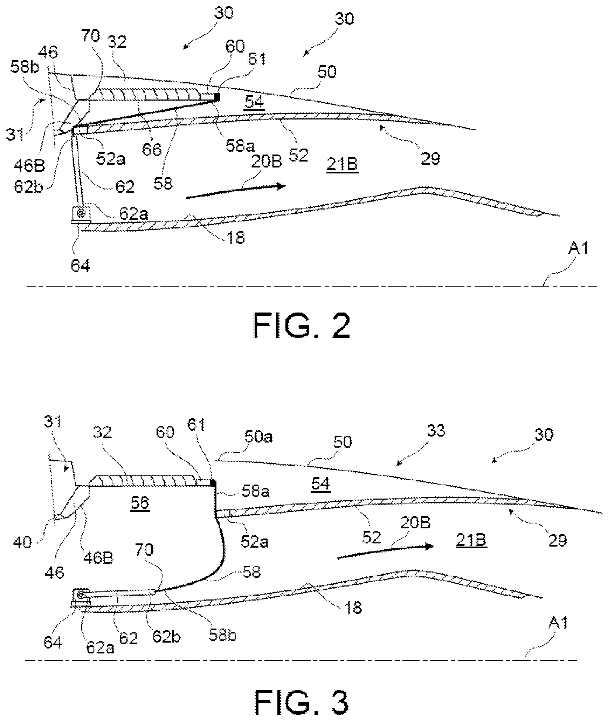

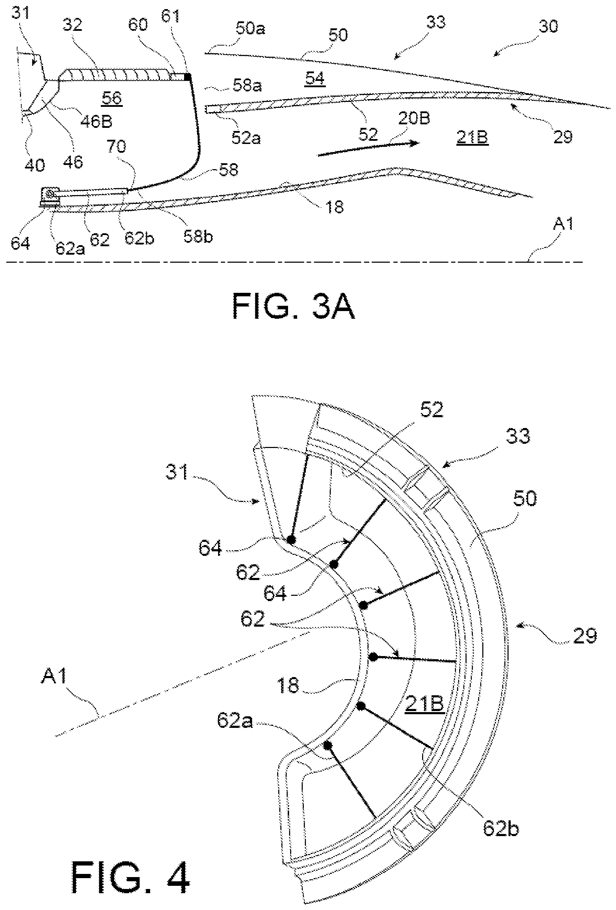

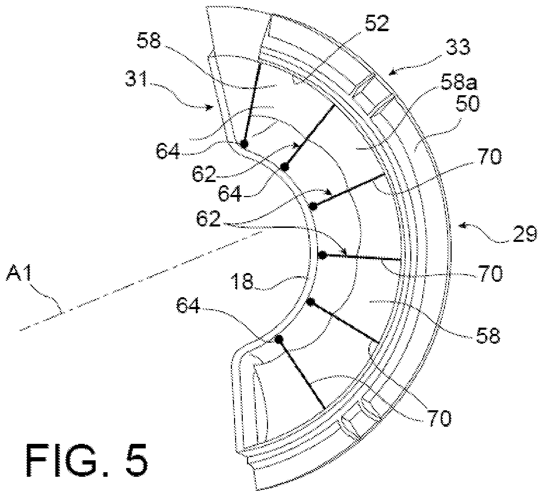

Cette configuration de poussée directe est également représentée sur les figures 2 et 4, tandis que la position reculée d'inversion de poussée de la structure mobile 29 est représentée sur les figures 3 et 5. Sur la figure 3, il est montré que le panneau acoustique interne reculé 52 des capots d'inverseur laisse apparaître en amont une ouverture de passage 56 de la veine secondaire 21B vers les grilles de déviation 32. L'ouverture 56 est donc également délimitée vers l'amont par le bord de déviation 46B, qui s'évase radialement vers l'extérieur en allant vers l'arrière, pour canaliser un écoulement d'air destiné à traverser les grilles 32 lorsque le système mobile se trouve dans cette position reculée d'inversion de poussée. En d'autres termes, le bord de déviation 46B s'éloigne progressivement de l'axe A1 en allant de l'avant vers l'arrière, pour guider / dévier l'air vers les grilles 32 en configuration d'inversion de poussée. A l'aval, l'ouverture de passage 56 est délimitée en particulier par l'extrémité amont 52a de la paroi radialement interne 52.

Afin de dévier au moins une partie du flux secondaire 20B vers l'ouverture de passage 56 définie axialement entre le bord de déviation 46B et l'extrémité amont 52a de la paroi radialement interne 52 de chaque capot 33, l'inverseur 30 comporte dans ce mode de réalisation préféré une ou plusieurs membranes d'obturation 58. De préférence, plusieurs membranes circonférentiellement adjacentes sont associées à chaque capot 33.

Chaque membrane 58 peut être réalisée dans un matériau connu de l'homme du métier pour ce type d'application. Par exemple, il peut s'agir d'un tissu non imprégné, par exemple de fibres d'aramide. La membrane 58 peut également être réalisée à l'aide d'un matériau composite dont la matrice est particulièrement souple, par exemple en polyuréthane aliphatique, ce qui permet l'utilisation dans des conditions de températures différentes, notamment des températures plus faibles dans le cas d'une membrane en polyuréthane aliphatique que dans le cas d'une membrane en silicone. La matrice donne une faible capacité de reprise en flexion et le comportement de la structure obtenue est bien celui d'une membrane. L'une des propriétés majeures de cette membrane 58 est de pouvoir se plier de manière parfaitement réversible (élastique ou par glissement de fibres) avec un rayon de courbure très faible par rapport à sa surface, et d'avoir une épaisseur très faible, par exemple de l'ordre de 0,1 à 3 mm. A titre informatif, il est observé que cette membrane 58 se comporte comme une voile de bateau ou un parachute / une aile volante quand elle est mise sous pression.

Toujours en référence aux figures 1 à 5, il est prévu des premiers moyens d'accrochage reliant une première extrémité 58a de la membrane d'obturation 58 à un cadre arrière 60 de support des grilles 32, via un dispositif d'interface 61 comme cela sera exposé en détail ultérieurement. Le cadre arrière 60 est un support annulaire ou en forme de tronçon annulaire, reliant en effet l'extrémité arrière de plusieurs grilles adjacentes. De plus, des seconds moyens d'accrochage relient une seconde extrémité 58b de la membrane d'obturation 58, opposée à la première membrane 58a, à la paroi 18.

En outre, comme cela est visible sur les figures 1, 2 et 4, lorsque la structure mobile 29 occupe sa position avancée de poussée directe, au moins une partie de la membrane d'obturation 58 se trouve agencée radialement entre les grilles de déviation 32 et la paroi radialement interne 52 du capot d'inverseur 33, dans la cavité 54. De préférence, la partie de la membrane 58 qui se trouve dans cette cavité 54 du capot d'inverseur 33, recouvre radialement l'intégralité de la longueur des grilles 32. De ce fait, lorsque la structure mobile 29 adopte sa position avancée de poussée directe, la seconde extrémité 58b de la membrane 58 est pincée entre l'extrémité amont de la paroi 18, et le bord de déviation 46B. Afin d'éviter d'éventuelles dégradations de la membrane 58 du fait de ce pincement, le bord de déviation 46B peut localement présenter une échancrure de forme adaptée pour recevoir l'extrémité amont 52a de la paroi 52. Ainsi, la membrane 58 se trouve également plaquée dans cette échancrure du bord de déviation 46B, par l'appui de l'extrémité amont de la paroi 52.

Egalement, comme cela est visible sur la figure 3, lorsque la structure mobile 29 se déplace et qu'elle occupe sa position reculée d'inversion de poussée à la fin de ce déplacement, la membrane d'obturation 58 se trouve en partie en appui contre l'extrémité amont 52a de la paroi radialement interne 52 du capot d'inverseur, correspondant donc au panneau acoustique. Plus précisément, au cours du déplacement vers l'arrière de la structure mobile 29, la membrane 58 glisse sur cette extrémité amont 52a de la paroi radialement interne 52.

En position reculée d'inversion de poussée de la figure 3, la membrane 58 est donc en appui axial vers l'aval contre l'extrémité amont 52a. Il est à noter que selon l'étendue de la course axiale de l'inverseur, la membrane 58 peut ne plus être en contact avec le panneau interne acoustique 52 dans la position totalement déployée de l'inverseur, où le capot 33 est dans sa position la plus reculée. Une telle configuration est représentée sur la figure 3A, sur laquelle il est bien montré que la membrane 58 se trouve en amont et à distance de l'extrémité amont 52a de la paroi 52 du capot d'inverseur. L'option avec contact correspond à une course minimisée de l'inverseur, tandis que l'option sans contact correspond en général à une forme de membrane plus lisse en jet inversé, donc plus performante d'un point de vue aérodynamique.

Ainsi, la partie de la membrane 58 qui se situe radialement vers l'extérieur par rapport à sa zone d'appui sur la paroi 52 obture une partie de l'ouverture axiale amont de la cavité 54, tandis que l'autre partie située radialement vers l'intérieur obture au moins une partie de la veine secondaire 21B, déviant de la sorte au moins une partie du flux secondaire 20B vers l'ouverture de passage 56 en direction des grilles 32.

L'extrémité 58b de la membrane 58 a quant à elle des câbles 70 reliés à la paroi 18 (également dénommée IFS, de l'anglais « Inner Fixed Structure »), par une liaison qui peut avantageusement exercer une force de traction sur chaque câble 70 le ramenant vers cette paroi 18, par exemple au moyen d'une liaison élastique. Les câbles 70 eux-mêmes peuvent être élastiques, par exemple en utilisant des câbles en kevlar, et ces mêmes câbles peuvent être mis en tension lors de la fermeture du capot coulissant 33. Des renforts peuvent être intégrés à la membrane 58 dans le prolongement de ces câbles 70, jusqu'aux points d'accroche externes avec le cadre arrière de support de grilles 60, ou la paroi externe 50 du capot coulissant 33.

Ces câbles 70 sont avantageusement positionnés radialement dans la veine en étant circonférentiellement espacés les uns des autres. En position de jet direct, ils tendent la membrane 58 entre son extrémité 58a et le bord d'attaque / l'extrémité amont 52a de la paroi 52 du capot. Lors du déploiement, quand le capot coulissant 33 recule, les câbles 70 viennent tirer la membrane 58 vers la veine secondaire de façon à ce qu'elle y prenne l'air et s'y déploie progressivement.

Selon le but recherché, les seconds moyens d'accrochage peuvent être constitués par des bielles 62, à la place des câbles cités précédemment. Une première extrémité 62a de chacune d'elles est montée sur la paroi 18, de préférence par l'intermédiaire d'une liaison pivot ou rotule 64. Cette liaison 64 peut être réalisée à l'aide d'une ferrure fixée sur la paroi fixe 18 et coopérant avec la première extrémité de bielle 62a.

Les bielles 62 sont espacées circonférentiellement les unes des autres au sein de la veine secondaire 21B, et leur nombre peut par exemple varier de deux à dix.

Chaque bielle 62 est conçue pour se déplacer d'une position en saillie radialement dans la veine secondaire 21B, position montrée sur les figures 2 et 4 adoptée lorsque la structure mobile 29 occupe sa position avancée de poussée directe, à une position rabattue vers l'aval, montrée sur les figures 3 et 5 adoptée lorsque la structure mobile 29 occupe sa position reculée d'inversion de poussée.

Des moyens élastiques de rappel peuvent être prévus pour tendre à incliner chaque bielle 62 vers sa position rabattue / couchée de la figure 3, en particulier quand la bielle est dans sa position en saillie correspondant à la position de vol de l'inverseur.

La seconde extrémité 62b de chaque bielle 62, opposée à la première extrémité 62a, peut être raccordée directement sur la seconde extrémité 58b de la membrane 58. Néanmoins, d'autres solutions préférentielles sont retenues, comme celles visant à intégrer des câbles ou des sangles de renforts au sein des seconds moyens d'accrochage.

Dans le mode de réalisation représenté sur les figures 1 à 5, les câbles 70 coopèrent avec les bielles 62 en étant chacun fixé à la seconde extrémité 62b de l'une des bielles associée à ce câble. Alternativement, les câbles 70 pourraient traverser leurs bielles associées 62 pour être fixés sur la paroi 52 de délimitation radialement interne de la veine secondaire, par exemple via les ferrures 66.

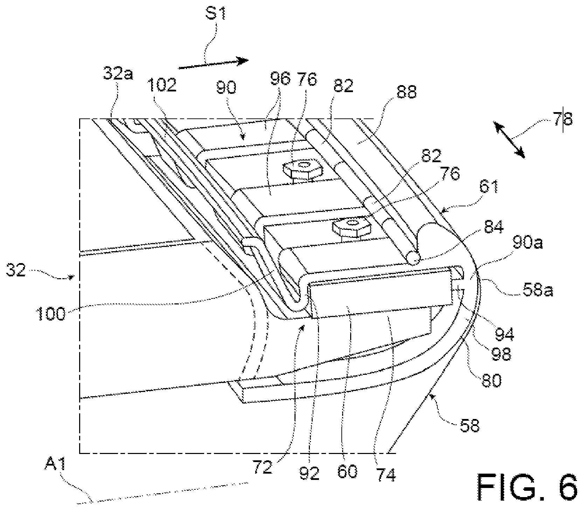

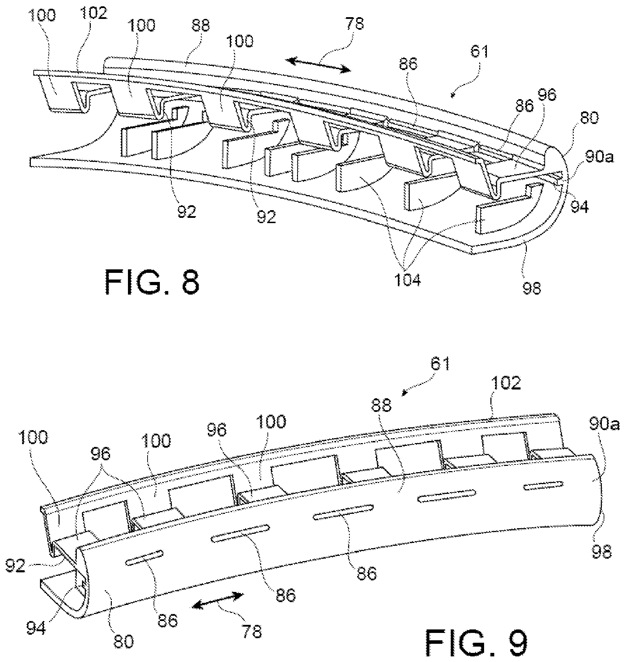

En référence aux figures 6 à 9 représentant un mode de réalisation préféré de l'invention, l'une des particularités de l'invention réside dans la mise en œuvre du dispositif d'interface 61 entre la première extrémité 58a de la membrane d'obturation 58, et une structure arrière de grilles 72 qui va à présent être décrite.

Cette structure arrière 72 comprend le cadre arrière 60 de support de grille, ainsi que l'aubage 32a situé le plus en arrière sur la grille de déviation 32. Elle comporte également un organe d'appui 74 de la grille sur le cadre arrière 60, l'organe d'appui étant en saillie vers l'arrière par rapport à l'aubage 32a situé le plus en arrière au sein de la grille. Ici, l'organe d'appui 74 s'étend axialement ou sensiblement axialement, et il est également fixé au cadre arrière 60 à l'aide de boulons 76 espacés les uns des autres selon une direction circonférentielle 78. L'organe d'appui 74 est préférentiellement situé radialement vers l'intérieur par rapport au cadre arrière de support de grille 60, même si une situation inversée pourrait être retenue, sans sortir du cadre de l'invention.

La structure 72 forme donc un ensemble solidaire, comprenant l'arrière de la grille 32 et se prolongeant à l'arrière de celle-ci. C'est elle qui est destinée à recevoir le dispositif d'interface 61, dont la particularité réside dans le fait d'être monté par un clip élastique enserrant cette structure 72, comme cela sera décrit ci-après.

Il est noté que dans ce mode de réalisation préféré, le dispositif d'interface 61 s'étend sur une étendue angulaire supérieure à 10°, en rapport à l'axe central longitudinal A1 de l'inverseur. D'ailleurs, il est également préférentiellement prévu que la membrane 58 présente la même étendue angulaire, et qu'une telle membrane 58 soit associée à chaque dispositif d'interface 61 s'étendant selon la direction circonférentielle 78. En effet, plusieurs dispositifs d'interface 61 sont prévus pour se succéder selon la direction 78, par exemple en étant placés bout-à-bout pour reconstituer un secteur proche de 360°, ou légèrement inférieur à 360°. Ce sont donc une pluralité de dispositifs d'interface 61 qui coopèrent avec le même cadre arrière annulaire de support de grille 60.

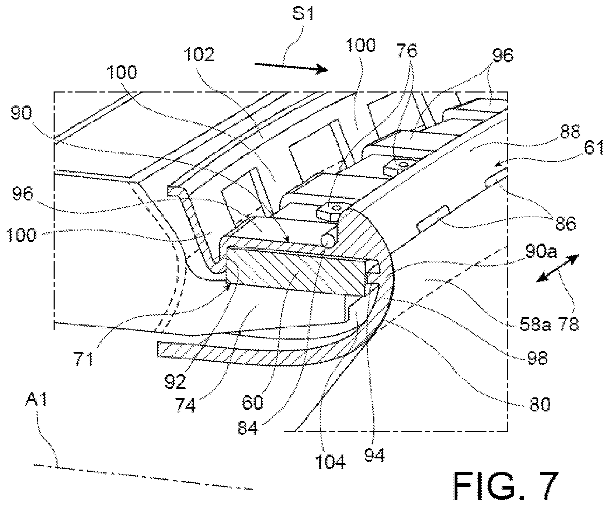

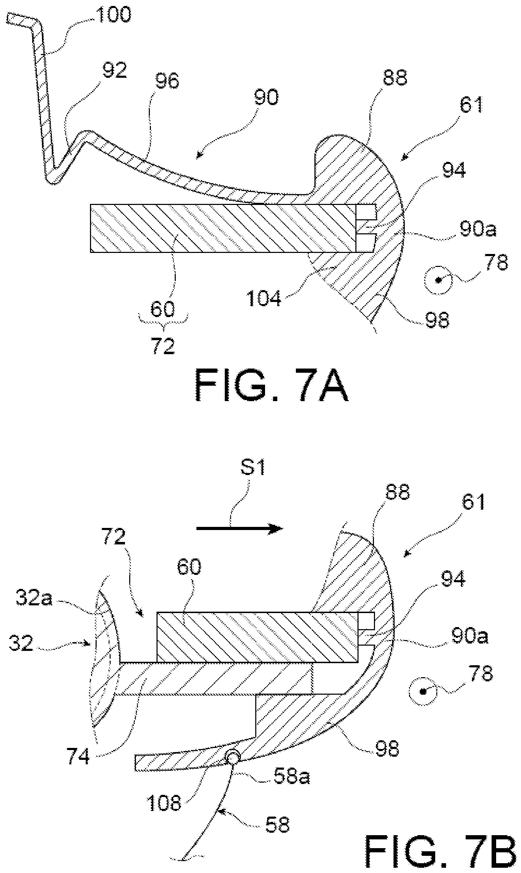

Tout d'abord, il est noté que le dispositif d'interface 61 présente, à l'arrière, une surface courbe 80 contre laquelle vient appuyer la membrane 58 en configuration déployée montrée sur les figures 6 et 7. La première extrémité 58a de la membrane d'obturation 58 est fixée sur ce dispositif d'interface 61 par l'intermédiaire des premiers moyens d'accrochage. Ceux-ci sont formés par des boucles textiles 82 qui traversent des fentes 86 pratiquées dans le dispositif d'interface 61, et qui débouchent sur la surface courbe 80. Un jonc 84 ou élément similaire, qui s'étend circonférentiellement, traverse chacune des boucles 82. Il se trouve par ailleurs en appui axial contre une excroissance 88 du dispositif d'interface, ce qui permet la retenue axiale des boucles 82 ainsi que de l'ensemble de la première extrémité 58a de la membrane 58. Comme visible sur les figures 6 et 7, l'excroissance 88 s'étend notamment radialement vers l'extérieur, avec la membrane 58 exerçant préférentiellement une traction vers l'intérieur. Le jonc 84 et l'excroissance 88 coopèrent ainsi ensemble de manière à assurer un maintien axial de la première extrémité 58a de la membrane d'obturation 58, traversée par ce même jonc.

D'autres types de premiers moyens d'accrochage peuvent néanmoins être mis en œuvre, comme des solutions à boutons clips, à boucles et crochets, ou encore à ralingue.

Pour le montage du dispositif d'interface 61 sur la structure 72, ce dispositif 61 forme un clip élastique 90 monté autour de la structure 72. Ce clip 90 comporte tout d'abord un crochet de serrage 92 en appui axial contre une extrémité avant du cadre arrière 60. En outre, le clip comprend une butée axiale arrière 94 en appui contre une extrémité arrière de ce même cadre arrière 60. Cette butée 94 se situe sur une portion arrière 90a du clip, qui contourne la structure 72 par l'arrière.

Ainsi, puisque le clip élastique 90 enserre axialement le cadre arrière 60 de support de grille, son crochet de serrage 92 force vers l'avant la butée axiale arrière 94 contre la partie arrière de la structure arrière, et plus précisément ici l'extrémité arrière du cadre arrière 60. La portion arrière de clip formée par la butée axiale arrière 94 est donc agencée en arrière par rapport à la structure 72, en contournant par l'arrière le cadre 60 ainsi que l'ensemble de la structure 72. A partir de cette butée axiale 94, le dispositif d'interface 61 comporte un rebord interne 98 qui définit une partie de la surface 80, et qui se courbe progressivement pour s'orienter axialement vers l'amont, radialement sous l'organe d'appui 74 et le cadre arrière 60.

Entre le crochet de serrage 92 et la butée axiale arrière 94, le clip 90 comporte des moyens flexibles, comme une ou plusieurs languettes axiales 96 s'étendant vers l'amont à partir de l'excroissance 88 en forme de lèvre ou de bourrelet. Les languettes flexibles 96 sont au contact d'une surface radialement externe du cadre arrière de support de grille 60. Elles sont conçues pour être amenées dans un état de contrainte prédéterminée, en flexion, dans lequel elles permettent de désengager le crochet de serrage 92 du cadre arrière 60. Cet état de contrainte prédéterminée a été représenté schématiquement sur la figure 7A. Il correspond donc à un état dans lequel le clip élastique 90 est considéré comme « ouvert ».

Pour atteindre cet état ouvert dans lequel les languettes 96, espacées circonférentiellement les unes des autres, sont en flexion, le clip 90 comporte aussi à l'extrémité du crochet de serrage 92, une patte de préhension 100. C'est en effet en agissant à l'aide d'un outil approprié sur cette patte de préhension 100, qui forme levier, qu'il est possible de mettre sous contrainte les languettes flexibles 96 dans ledit état de contrainte prédéterminée.

A titre indicatif, il est noté qu'au sein du dispositif d'interface 61, un crochet de serrage 92 est associé à chaque languette 96, celles-ci définissant entre elles des espaces dans lesquels sont placés les boulons 76. De même, à l'extrémité de chaque crochet 92, il est associé une patte de préhension 100 s'étendant radialement vers l'extérieur et vers l'amont. Le dispositif 61 comprend ainsi plusieurs pattes de préhension 100 espacées circonférentiellement les unes des autres, et qui peuvent être reliées entre elles par un organe de liaison 102, au niveau de leurs extrémités radialement extérieures. Cet organe de liaison s'étend préférentiellement sur toute la longueur du dispositif 61 selon la direction circonférentielle 78.

Pour consolider le maintien du dispositif d'interface 61 sur la structure 72, le dispositif 61 comporte également des moyens d'anti-rotation relativement à la structure 72, et en rapport avec la direction circonférentielle. Ces moyens d'anti-rotation sont des nervures 104 ou éléments similaires, au contact d'une surface radialement interne du cadre arrière 60 et/ou de l'organe d'appui 74. Ces nervures 104 sont espacées circonférentiellement les unes des autres, et elles sont portées par le rebord interne 98, en s'étendant radialement vers l'extérieur à partir de ce dernier.

Les nervures 104 agissent donc sur la structure 72 selon une direction opposée à celle de l'effort exercé par les languettes 96 sur le cadre de support 60, empêchant ainsi la rotation du dispositif d'interface 61 autour de la direction circonférentielle.

Sur les figures qui viennent d'être décrites, les premiers moyens d'accrochage 82, 84, 86 de la membrane 58 se trouvent au niveau d'une partie radialement extérieure du dispositif d'interface 61, sur l'excroissance 88. Néanmoins, d'autres possibilités sont offertes, comme celle visant à placer au moins une partie de ces premiers moyens d'accrochage en avant par rapport à une extrémité arrière de la structure 72. Dans l'exemple alternatif montré sur la figure 7B, les premiers moyens d'accrochage comprennent une ralingue 108 qui se situe à l'avant par rapport à l'extrémité arrière du cadre 60 et à celle de l'organe d'appui 74, donc plus proche du dernier aubage 32a de la grille. Cela permet à l'air extrait de la veine secondaire d'être mieux canalisé par la membrane 58 en direction de la grille 32, pour une performance accrue de l'inverseur. Ce principe peut être appliqué de manière à rapprocher, selon la direction axiale, les premiers moyens d'accrochage au plus près du dernier aubage de grille 32a.

Grâce à cette conception spécifique à l'invention, l'installation de la membrane d'obturation 58 sur l'inverseur est facilitée. En effet, il peut tout d'abord être réalisé la fixation de la première extrémité 58a de la membrane 58 sur le dispositif d'interface 61, à l'aide des boucles 82 et du jonc 84, et de tout autre moyen réputé approprié pour former les premiers moyens d'accrochage. Cette étape de fixation peut avantageusement être réalisée en dehors de l'inverseur, au sol, en parallèle de la fabrication / de l'assemblage d'autres composants de l'inverseur / de l'ensemble propulsif.

Lorsque la structure mobile 29 de l'inverseur a été placée dans sa position reculée d'inversion de poussée, le dispositif d'interface 61 peut être clipsé sur le cadre arrière 60 depuis l'extérieur de l'inverseur, c'est-à-dire avec l'opérateur agissant radialement depuis l'extérieur de cet inverseur. Pour l'installation du clip 90, l'opérateur agit avec un outil approprié sur les pattes de préhension 100 et/ou sur l'organe de liaison 102 qui les lie, afin de faire levier et de provoquer la flexion des languettes 96.

Ensuite, il suffit de pousser la membrane d'obturation 58 radialement vers l'intérieur dans la veine secondaire 21B, afin de raccrocher sa seconde extrémité 58b sur la paroi 18, comme cela est visible notamment sur la figure 3.

Le procédé de désinstallation de la membrane 58 est quant à lui mis en œuvre en inversant les étapes mentionnées ci-dessus.

Dans ce mode de réalisation préféré de l'invention, les languettes 96, les crochets de serrage 92 et le reste du dispositif d'interface 61 sont préférentiellement réalisés d'un seul tenant, c'est-à-dire d'une seule pièce, par exemple métallique.

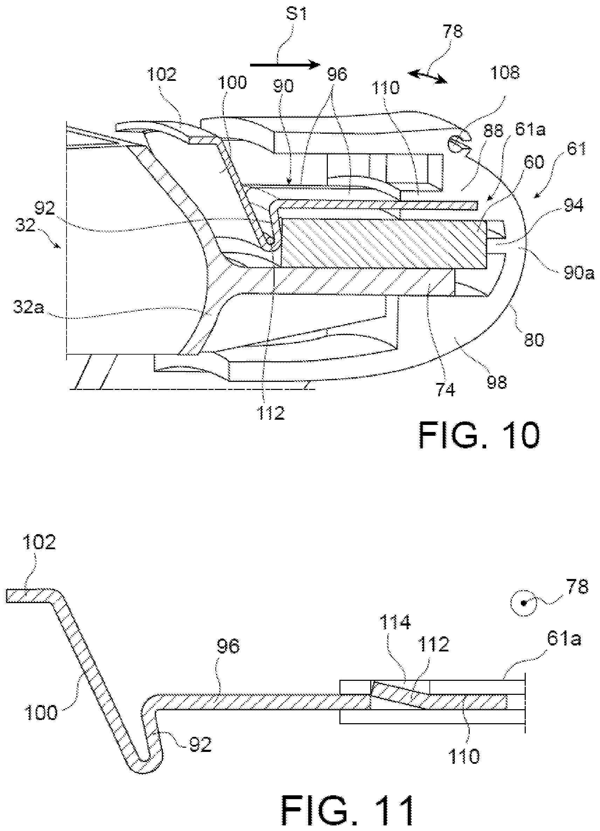

Selon une alternative montrée sur les figures 10 et 11, les languettes flexibles 96, les crochets de serrage 92, les pattes de préhension 100 ainsi que l'organe de liaison 102 sont réalisés d'un seul tenant, au sein d'une pièce rapportée sur un corps 61a du dispositif d'interface 61, qui peut lui aussi être réalisé d'une seule pièce. Cette conception facilite le changement des languettes ou des crochets, en cas d'endommagement de ceux-ci. Pour la liaison mécanique entre ces deux pièces, le corps 61a peut comprendre une fente 110 ouverte axialement vers l'amont et dans laquelle sont insérées les languettes 96. Le blocage axial peut être réalisé par un ergot élastique 112 sur chaque languette 96, qui s'insère dans une fenêtre 114 débouchant dans la fente 110 afin d'engendrer un blocage axial vers l'amont de ces languettes. Pour déverrouiller ce blocage axial, il suffit d'appuyer radialement sur les ergots élastiques 112, à l'aide d'un outil approprié depuis les fenêtres 114.

Dans cette alternative, une agrafe 112 offre une sécurité pour maintenir le clip 90 en position fermée de serrage, cette agrafe coopérant avec le corps 61a, et s'insérant dans le creux défini à la liaison entre chaque crochet 92 et sa patte de préhension associée 100.

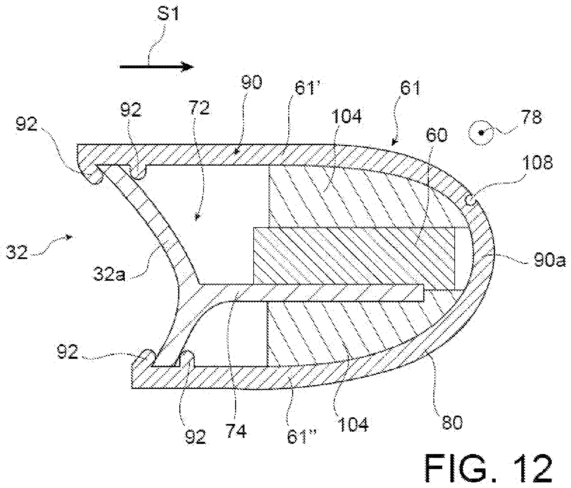

Dans un autre mode de réalisation préféré représenté sur la figure 12, c'est l'intégralité du dispositif d'interface 61 qui forme un clip élastique en forme de C, ouvert axialement vers l'amont. Globalement, ce dispositif 61 comprend deux branches de C, une branche radialement externe 61' et une branche radialement interne 61", chacune équipée de nervures anti-rotation 104 en appui radial contre la structure 72, d'une manière identique ou similaire à celle exposée dans le mode de réalisation précédent.

Au niveau de la jonction aval entre les deux branches 61', 61", la portion arrière 90a du clip 90 est agencée en arrière par rapport à la structure 72, en contournant par l'arrière l'extrémité arrière du cadre 60 et celle de l'organe d'appui 74.

Au niveau de l'extrémité avant de chacune des deux branches 61', 61", le clip comprend des crochets 92 permettant d'enserrer axialement d'une part l'extrémité radialement extérieure du dernier aubage 32a, et d'autre part l'extrémité radialement intérieure de ce dernier aubage 32a. Une butée axiale arrière contre la structure 72 peut être prévue sur le clip élastique 90, mais elle n'est pas nécessaire.

L'écartement / la déformation des branches 61, 61" du clip en forme générale de C permet d'insérer les crochets 92 de part et d'autre des extrémités radiales du dernier aubage 32a de la grille, avec lequel le clip 90 coopère donc directement.

Dans ce mode de réalisation préféré, les premiers moyens d'accrochage 104 de la membrane peuvent être prévus sur la branche radialement externe 61', ou bien sur la branche radialement interne 61".

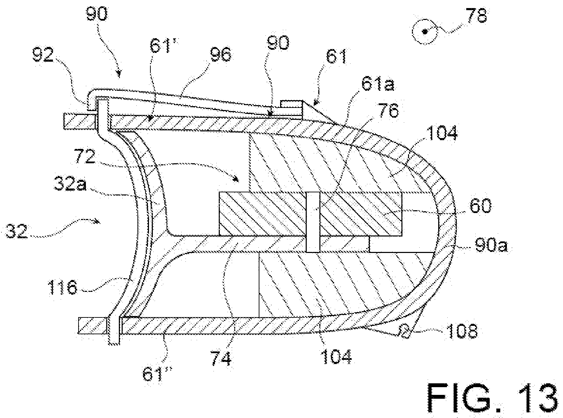

Selon encore un autre mode de réalisation préféré montré sur la figure 13, le dispositif d'interface comporte un corps principal 61a en forme de C ouvert axialement vers l'amont, et équipé des nervures anti-rotation 104.

Un clip 90 lui est rapporté sur sa branche radialement externe 61', avec une extrémité arrière solidaire de cette branche, et une extrémité avant en forme de crochet 92, ces deux extrémités étant reliées par une languette flexible 96.

Le crochet 92 coopère avec un verrou de clip 116 qui est en appui axial contre le dernier aubage 32a, en étant agencé en amont de ce celui-ci. Les deux extrémités radiales opposées du verrou 116 traversent respectivement les deux branches du C 61', 61", et le crochet 92 coopère avec l'extrémité radiale externe du verrou qui est en saillie de la branche 61'. Plus précisément, le crochet 92 force l'extrémité radiale externe du verrou 116 axialement vers l'arrière.

Une butée axiale arrière contre la structure 72 peut être prévue sur le clip élastique 90, par exemple au niveau de la portion arrière 90a de ce clip, mais une telle butée n'est pas nécessaire.

Ici, chaque verrou 116 peut s'étendre circonférentiellement sur toute la longueur du dispositif d'interface 61.

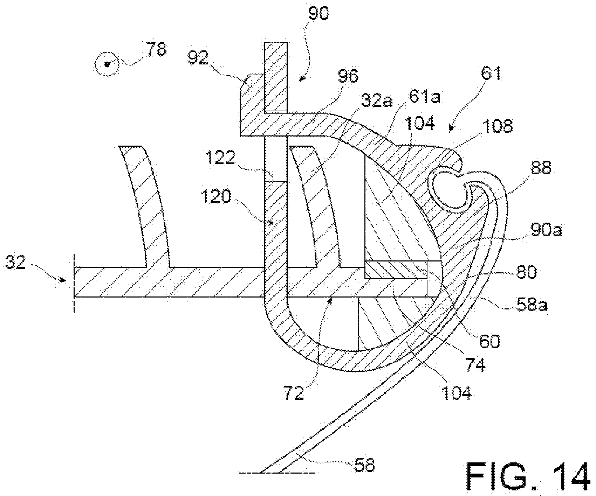

Selon encore un autre mode de réalisation préféré de l'invention montré sur la figure 14, le dispositif d'interface 61 forme un clip élastique 90 qui entoure la structure 72, à la fois en la contournant par l'avant, par l'arrière, et radialement par l'intérieur et l'extérieur.

Pour ce faire, le corps 61a du dispositif 61 comprend l'excroissance 88 sur laquelle se trouvent les premiers moyens d'accrochage 108 de la membrane 58. Vers l'avant, s'étendent plusieurs languettes élastiques 96 espacées circonférentiellement les unes des autres, et portant chacune à leur extrémité un crochet 92 du clip 90. Chaque crochet 92 coopère avec une autre armature de clip 120 formée au sein du corps 61a, cette armature, éventuellement de nature élastique, contournant le cadre 60 et l'organe d'appui 74 radialement vers l'intérieur, puis contournant le dernier aubage 32a radialement vers l'intérieur et axialement vers l'avant. Pour ce faire, cette armature 120 peut également se présenter sous la forme de plusieurs languettes espacées circonférentiellement les uns des autres.

Au niveau de son extrémité radialement externe, l'armature de clip 120 présente des ouvertures 122 pour le passage des languettes 96. De cette manière, les crochets 92 peuvent appuyer axialement vers l'arrière contre l'extrémité radialement externe de l'armature de clip 120, forçant celle-ci à s'appuyer axialement, contre le dernier aubage 32a.

Une butée axiale arrière contre la structure 72 peut être prévue sur le clip élastique 90, par exemple au niveau de la portion arrière 90a de ce clip qui contourne le cadre 60, mais une telle butée n'est pas nécessaire.

Diverses modifications peuvent être apportées par l'homme du métier à l'invention qui vient d'être décrite, uniquement à titre d'exemples non limitatifs, et dont la portée est définie par les revendications annexées. Par exemple, l'inverseur de poussée 30 peut alternativement présenter une architecture en « C » ou en « O ». En outre, si les modes de réalisation préférés décrits ci-dessus concernent une conception d'inverseur à grilles de déviation fixes, ces grilles peuvent alternativement être intégrées à la structure mobile de l'inverseur.

## Revendications

1. Inverseur de poussée (30) pour ensemble propulsif d'aéronef, l'inverseur comprenant une structure fixe (31) équipée d'une paroi de délimitation radialement interne (18) d'une veine secondaire (21B) de l'ensemble propulsif destinée à être traversée par un flux secondaire (20B), l'inverseur comprenant également une structure mobile (29) comprenant au moins un capot d'inverseur (33) équipé d'une paroi radialement externe (50) et d'une paroi radialement interne (52) formant une délimitation radialement externe de la veine secondaire (21B), la structure mobile étant déplaçable en translation par rapport à la structure fixe selon un axe central longitudinal (A1) de l'inverseur, entre une position avancée de poussée directe et une position reculée d'inversion de poussée, l'inverseur comportant également une grille de déviation (32) ainsi qu'une membrane d'obturation (58) conçue pour dévier au moins une partie du flux secondaire vers la grille de déviation (32) lorsque la structure mobile (29) se trouve en position reculée d'inversion de poussée, l'inverseur comportant également un cadre arrière (60) de support de grille de déviation,
**caractérisé en ce que** l'inverseur comporte un dispositif d'interface (61) entre la membrane d'obturation (58) et une structure arrière de grilles (72) comprenant le cadre arrière (60) de support de grille, l'aubage (32a) situé le plus en arrière sur la grille de déviation, ainsi qu'un organe d'appui (74) de la grille sur le cadre arrière (60) de support de grille, l'organe d'appui (74) étant en saillie vers l'arrière par rapport à l'aubage (32a) le plus arrière et étant également fixé au cadre arrière (60) de support de grille,
**en ce qu'**une première extrémité (58a) de la membrane d'obturation (58) est fixée sur le dispositif d'interface (61) par l'intermédiaire de premiers moyens d'accrochage (82, 84, 86, 108),
et **en ce que** le dispositif d'interface (61) forme un clip élastique (90) monté autour de la structure arrière (72), et dont une portion arrière (90a) de clip est agencée en arrière par rapport à la structure arrière (72).

2. Inverseur de poussée selon la revendication 1, **caractérisé en ce que** le dispositif d'interface (61) est équipé de moyens d'anti-rotation (104) relativement à la structure arrière (72), les moyens d'anti-rotation étant au contact du cadre arrière (60) de support de grille et/ou de l'organe d'appui (74) de la grille de déviation.

3. Inverseur de poussée selon la revendication 1 ou la revendication 2, **caractérisé en ce que** le clip (90) comporte un crochet (92) en appui contre l'un quelconque des éléments suivants :
- le cadre arrière (60) de support de grille ;
- l'aubage (32a) le plus arrière de la grille ; ou
- un verrou de clip (116) lui-même en appui contre l'aubage (32a) le plus arrière de la grille.

4. Inverseur de poussée selon la revendication 3, **caractérisé en ce que** le crochet (92) du clip élastique est un crochet de serrage en appui contre une extrémité avant du cadre arrière (60) de support de grille, et **en ce que** le clip élastique (90) comprend une butée axiale arrière (94) en appui contre une partie arrière de la structure arrière (72), de préférence contre une extrémité arrière du cadre arrière (60) de support de grille, le crochet de serrage (92) forçant vers l'avant la butée axiale arrière (94) contre la partie arrière de la structure arrière (72).

5. Inverseur de poussée selon la revendication 4, **caractérisé en ce que** le clip élastique (90) comporte, entre le crochet de serrage (92) et la butée axiale arrière (94), des moyens flexibles (96) permettant, lorsqu'ils sont amenés dans un état de contrainte prédéterminée, de désengager le crochet (92) du cadre arrière (60) de support de grille, les moyens flexibles (96) comprenant préférentiellement une languette axiale.

6. Inverseur de poussée selon la revendication 5, **caractérisé en ce que** le clip élastique (90) comporte également, de préférence à l'extrémité du crochet de serrage (92), des moyens de préhension (100) permettant, sous contrainte, d'amener les moyens flexibles (96) dans ledit état de contrainte prédéterminée.

7. Inverseur de poussée selon l'une quelconque des revendications précédentes, **caractérisé en ce qu'**au moins une partie des premiers moyens d'accrochage (82, 84, 86, 108) de la membrane se situe en avant par rapport à une extrémité arrière de la structure arrière (72).

8. Inverseur de poussée selon l'une quelconque des revendications précédentes, **caractérisé en ce que** la grille de déviation (32) appartient à la structure fixe (31) de l'inverseur.

9. Ensemble propulsif (1) pour aéronef, comprenant une turbomachine (2) et une nacelle (3) comportant au moins un capot de soufflante (14), ainsi qu'un inverseur de poussée (30) selon l'une quelconque des revendications précédentes.

10. Procédé d'installation d'une membrane d'obturation (58) d'un inverseur de poussée (30) selon l'une quelconque des revendications 1 à 8, **caractérisé en ce qu'**il comprend les deux étapes suivantes, réalisées dans un ordre indifférent :
- fixation de la première extrémité (58a) de la membrane d'obturation (58) sur le dispositif d'interface (61), par l'intermédiaire des premiers moyens d'accrochage (82, 84, 86, 108),
- déplacement de la structure mobile (29) de l'inverseur dans sa position reculée d'inversion de poussée ;
- depuis l'extérieur de l'inverseur, clipsage du dispositif d'interface (61) sur la structure arrière (72), et poussée de la membrane d'obturation (58) dans la veine secondaire (21B).

## Patentansprüche

1. Schubumrichter (30) für eine Flugzeugantriebseinheit, wobei der Umrichter eine feste Struktur (31) umfasst, die mit einer radial innere Begrenzungswand (18) eines Sekundärkanals (21B) der Antriebseinheit ausgestattet ist, der von einem Sekundärstrom (20B) durchquert werden soll, wobei der Umrichter auch eine bewegliche Struktur (29) umfasst, die mindestens eine Umrichterabdeckung (33) umfasst, die mit einer radial äußeren Wand (50) und einer radial inneren Wand (52) ausgestattet ist, die eine radial äußere Begrenzung des Sekundärkanals (21B) bilden, wobei die bewegliche Struktur in Bezug auf die feste Struktur entlang einer Längsmittelachse (A1) des Umrichters zwischen einer vorgeschobenen Position für den direkten Schub und einer zurückgeschobenen Position für die Schubumkehr verschiebbar ist, wobei der Umrichter auch ein Umlenkgitter (32) sowie eine Verschlussmembran (58) umfasst, die ausgebildet ist, um mindestens einen Teil des Sekundärstroms zum Umlenkgitter (32) umzuleiten, wenn sich die bewegliche Struktur (29) in der zurückgeschobenen Position für die Schubumkehr befindet, wobei der Umrichter auch einen hinteren Trägerrahmen (60) für das Umlenkgitter umfasst,
**dadurch gekennzeichnet, dass** der Umrichter eine Schnittstellenvorrichtung (61) zwischen der Verschlussmembran (58) und einer hinteren Gitterstruktur (72) umfasst, die den hinteren Gitterträgerrahmen (60), die am weitesten hinten am Umlenkgitter angeordnete Leitschaufel (32a) sowie ein Stützelement (74) des Gitters am hinteren Gitterträgerrahmen (60) umfasst, wobei das Stützelement (74) gegenüber der hintersten Leitschaufel (32a) nach hinten hervorsteht und ebenfalls am hinteren Gitterträgerrahmen (60) befestigt ist,
dadurch, dass ein erstes Ende (58a) der Verschlussmembran (58) über erste Befestigungsmittel (82, 84, 86, 108) an der Schnittstellenvorrichtung (61) befestigt ist,
und dadurch, dass die Schnittstellenvorrichtung (61) einen elastischen Clip (90) bildet, der um die hintere Struktur (72) herum montiert ist und dessen hinterer Clipabschnitt (90a) in Bezug auf die hintere Struktur (72) hinten angeordnet ist.

2. Schubumrichter nach Anspruch 1, **dadurch gekennzeichnet, dass** die Schnittstellenvorrichtung (61) mit Antirotationsmitteln (104) in Bezug auf die hintere Struktur (72) ausgestattet ist, wobei die Antirotationsmittel mit dem hinteren Gitterträgerrahmen (60) und/oder dem Stützelement (74) des Umlenkgitters in Kontakt stehen.

3. Schubumrichter nach Anspruch 1 oder Anspruch 2, **dadurch gekennzeichnet, dass** der Clip (90) einen Haken (92) umfasst, der an einem der folgenden Elemente anliegt:
- dem hinteren Gitterträgerrahmen (60);
- der hintersten Leitschaufel (32a) des Gitters; oder
- einer Clipverriegelung (116), die selbst an der hintersten Leitschaufel (32a) des Gitters anliegt.

4. Schubumrichter nach Anspruch 3, **dadurch gekennzeichnet, dass** der Haken (92) des elastischen Clips ein Spannhaken ist, der an einem vorderen Ende des hinteren Gitterträgerrahmens (60) anliegt, und dass der elastische Clip (90) einen hinteren axialen Anschlag (94) umfasst, der an einem hinteren Teil der hinteren Struktur (72) anliegt, vorzugsweise an einem hinteren Ende des hinteren Gitterträgerrahmens (60), wobei der Spannhaken (92) den hinteren axialen Anschlag (94) nach vorne gegen den hinteren Teil der hinteren Struktur (72) drückt.

5. Schubumrichter nach Anspruch 4, **dadurch gekennzeichnet, dass** der elastische Clip (90) zwischen dem Spannhaken (92) und dem hinteren axialen Anschlag (94) flexible Mittel (96) umfasst, die es ermöglichen, wenn sie in einen vorbestimmten Spannungszustand gebracht werden, den Haken (92) aus dem hinteren Gitterträgerrahmen (60) zu lösen, wobei die flexiblen Mittel (96) vorzugsweise eine axiale Lasche umfassen.

6. Schubumrichter nach Anspruch 5, **dadurch gekennzeichnet, dass** der elastische Clip (90) auch, vorzugsweise am Ende des Spannhakens (92), Greifmittel (100) aufweist, die es ermöglichen, die flexiblen Mittel (96) unter Spannung in den vorbestimmten Spannungszustand zu bringen.

7. Schubumrichter nach einem der vorhergehenden Ansprüche, **dadurch gekennzeichnet, dass** sich mindestens ein Teil der ersten Befestigungsmittel (82, 84, 86, 108) der Membran vor einem hinteren Ende der hinteren Struktur (72) befindet.

8. Schubumrichter nach einem der vorhergehenden Ansprüche, **dadurch gekennzeichnet, dass** das Umlenkgitter (32) zu der festen Struktur (31) des Umrichters gehört.

9. Antriebseinheit (1) für ein Flugzeug, umfassend eine Turbomaschine (2) und eine Gondel (3), die mindestens eine Gebläsehaube (14) sowie einen Schubumrichter (30) nach einem der vorhergehenden Ansprüche umfasst.

10. Verfahren zum Einbau einer Verschlussmembran (58) eines Schubumrichters (30) nach einem der Ansprüche 1 bis 8, **dadurch gekennzeichnet, dass** es die folgenden beiden Schritte umfasst, die in einer beliebigen Reihenfolge durchgeführt werden:
- Befestigen des ersten Endes (58a) der Verschlussmembran (58) an der Schnittstellenvorrichtung (61) über die ersten Befestigungsmittel (82, 84, 86, 108),
- Verschieben der beweglichen Struktur (29) des Umrichters in ihre zurückgeschobene Position für die Schubumkehr;
- von der Außenseite des Umrichters aus, Einklipsen der Schnittstellenvorrichtung (61) an der hinteren Struktur (72) und Drücken der Verschlussmembran (58) in den Sekundärkanal (21B).

## Claims

1. A thrust reverser(30) for an aircraft propulsion unit, the reverser comprising a fixed structure (31) equipped with a radially internal delimiting wall (18) of a secondary flow path (21B) of the propulsion unit through which a secondary flow (20B) is intended to pass, the reverser also comprising a movable structure (29) comprising at least one reverser cover (33) equipped with a radially external wall (50) and a radially internal wall (52) forming a radially external delimitation of the secondary flow path (21B), the movable structure being movable in translation with respect to the fixed structure along a longitudinal central axis (A1) of the reverser, between a forward direct-thrust position and a retracted reverse-thrust position, the reverser also including a deflection cascade (32) and a sealing membrane (58) to deflect at least one portion of the secondary flow toward the deflection cascade (32) when the movable structure (29) is in the retracted reverse-thrust position, the reverser also including a rear frame (60) for supporting the deflection cascade,
**characterized in that** the reverser includes an interface device (61) between the sealing membrane (58) and a rear cascade structure (72) comprising the rear cascade support frame (60), the vanes (32a) located furthest back on the deflection cascade, and a bearing member (74) via which the cascade bears against the rear cascade support frame (60), the bearing member (74) projecting behind the vanes (32a) located furthest back and also being fastened to the rear cascade support frame (60),
**in that** a first end (58a) of the sealing membrane (58) is fastened to the interface device (61) via first coupling means (82, 84, 86, 108),
and **in that** the interface device (61) forms an elastic clip (90) mounted around the rear structure (72), and a rear clip portion (90a) whereof is arranged behind the rear structure (72).

2. The thrust reverser according to claim 1, **characterized in that** the interface device (61) is equipped with anti-rotation means (104) relative to the rear structure (72), the anti-rotation means being in contact with the rear cascade support frame (60) and/or the bearing member (74) of the deflection cascade.

3. The thrust reverser according to claim 1 or claim 2, **characterized in that** the clip (90) includes a hook (92) against any one of the following elements:
- the rear cascade support frame (60);
- the vanes (32a) located furthest back on the cascade; or
- a clip latch (116) itself bearing against the vanes (32a) located furthest back on the cascade.

4. The thrust reverser according to claim 3, **characterized in that** the hook (92) of the elastic clip is a clamping hook bearing against a front end of the rear cascade support frame (60), and **in that** the elastic clip (90) comprises a rear axial stop (94) bearing against a rear portion of the rear structure (72), preferably against a rear end of the rear cascade support frame (60), the clamping hook (92) forcing the rear axial stop (94) forward against the rear portion of the rear structure (72).

5. The thrust reverser according to claim 4, **characterized in that** the elastic clip (90) includes, between the clamping hook (92) and the rear axial stop (94), flexible means (96) making it possible, when they are moved to a predefined stress state, to disengage the hook (92) from the rear cascade support frame (60), the flexible means (96) preferably comprising an axial tab.

6. The thrust reverser according to claim 5, **characterized in that** the elastic clip (90) also includes, preferably at the end of the clamping hook (92), gripping means (100) making it possible, under stress, to move the flexible means (96) to said predefined stress state.

7. The thrust reverser according to any one of the preceding claims, **characterized in that** at least one portion of the first coupling means (82, 84, 86, 108) of the membrane is located in front of a rear end of the rear structure (72).

8. The thrust reverser according to any one of the preceding claims, **characterized in that** the deflection cascade (32) belongs to the fixed structure (31) of the reverser.

9. An aircraft propulsion unit (1), comprising a turbine engine (2) and a nacelle (3) including at least one fan cover (14), and a thrust reverser (30) according to any one of the preceding claims.

10. A method for installing a sealing membrane (58) of a thrust reverser (30) according to any one of claims 1 to 8, **characterized in that** it comprises the following two steps, carried out in any order:
- fastening the first end (58a) of the sealing membrane (58) on the interface device (61), via the first coupling means (82, 84, 86, 108),
- moving the movable structure (29) of the reverser to its retracted reverse-thrust position;
- from outside the reverser, clipping the interface device (61) onto the rear structure (72), and pushing the sealing membrane (58) into the secondary flow path (21B).
